# EUROPÄISCHE PATENTANMELDUNG

(11) **EP 2 860 835 A1**
(43) Veröffentlichungstag der Anmeldung: **15.04.2015**
(21) Anmeldenummer: 14183497.8
(22) Anmeldetag: 04.09.2014
(51) Int. Cl.: H02H 1/00, H01H 71/70

(54) **Steuereinrichtung und Datenübertragungsanordnung mit Steuereinrichtung zum Steuern mindestens eines Schalterfernantriebes für mindestens einen Trenn- und/oder Lasttrennschalter in einem elektrischen Energieversorgungsnetz**

(30) Priorität: 17.09.2013 DE 102013218643
(71) Anmelder: Siemens Aktiengesellschaft, 80333 München (DE)
(72) Erfinder: Dölling, Andre, 91056 Erlangen (DE)

(57) **Zusammenfassung**

Gegenstand der vorliegenden Erfindung ist eine Steuereinrichtung (53) zum Steuern mindestens eines Schalterfernantriebes (6) für mindestens einen Trenn- und/oder Lasttrennschalter (4) in einem elektrischen Energieversorgungsnetz, dadurch gekennzeichnet, dass
die Steuereinrichtung (53) mindestens eine Ethernet-Schnittstelle (51) für das Empfangen von Steuerbefehlen und das Senden von Rückmeldungen aufweist.

Weiterhin ist eine Datenübertragungsanordnung (50) mit Steuereinrichtung (53) Gegenstand der vorliegenden Erfindung.

## Beschreibung

Die vorliegende Erfindung betrifft eine Steuereinrichtung und eine Datenübertragungsanordnung mit Steuereinrichtung zum Steuern mindestens eines Schalterfernantriebes für mindestens einen Trenn- und/oder Lasttrennschalter in einem elektrischen Energieversorgungsnetz.

Fahrleitungsanlagen für den Schienenverkehr sind durch ihre große räumliche Ausdehnung und die teilweise große Anzahl von elektrischen Anlagen der Bahnstromversorgung gekennzeichnet, wobei insbesondere eine große Anzahl von Trenn- und/oder Lasttrennschalter an der Bahnstromversorgungsstrecke vorzusehen ist.

Die Trenn- oder Lasttrennschalter sind üblicherweise als Masttrennschalter ausgeführt, d.h. an einem Fahrleitungsmast einer Strecke montiert. In der Regel werden die Schalter über Schalterfernantriebe ferngesteuert angetrieben. Die Fernsteuerung erfolgt dabei durch Fernwirkstationen. In vielen Fällen besitzt der Schalterfernantrieb selbst keine eigene Steuerung oder Intelligenz, sondern nur so genannte Betätiger, die bei Erreichen der vorgesehenen Schalterstellung ein Ausschalten des Schalterfernantriebes sicherstellen.

Weiterhin werden in Schalterfernantrieben zunehmend Steuereinrichtungen eingesetzt, die einerseits über eine mehradrige Kupferleitung mit einer Fernwirkstation und anderseits über weitere mehradrige Kabel mit dem Antriebsmotor verbunden werden, um diesen Ein- oder Auszuschalten. Diese Steuereinrichtungen haben neben der Antriebssteuerung und der Befehlsverarbeitung oftmals zusätzliche Aufgaben wie z.B. den Schutz gegen Überlast. Oft ist es vorgesehen, dass die Steuereinrichtungen von der Fernwirkstation sowohl mit Energie für den Antriebsmotor als auch mit Steuerbefehlen für den Schalterfernantrieb versorgt werden. Die Steuereinrichtungen geben Rückmeldungen über die Stellung des Trenn- oder Lasttrennschalters sowie über den Status der Steuerungseinrichtung an die Fernwirkstation zurück.

In speziellen Verfahren lässt sich ein Schalterbetrieb vollständig mit einem mindestens 3-adrigen Kabel steuern. Hierzu ist eine spezielle Ansteuerelektronik wie beispielsweise Steuermodule der ESN-Bahnschaltgeräte GmbH des Typs 8513, bekannt aus der Produktbroschüre "Version 01 05 02 / ESN 8513", oder Mastschaltersteuerungen für Oberleitungsanlagen (MSS OLA) der Siemens AG, bekannt aus der Produktbroschüre "Innovative Mastschaltersteuerung für Oberleitungsanlagen" mit der Kennnummer TH 345-100886 WS 09100.25 aus dem Jahr 2010, in der Fernwirkstation erforderlich.

Aus der "Produktinformation Version 1.1.1 Nr. A6Z0003070975" aus dem Jahr 2012 der Siemens AG sind elektromechanische Schalterfernantriebe der Produktreihen SICAT 8WL6243, 8WL6244, 8WL6253 und 8WL6254 für Oberleitungsanlagen im Nahund Fernverkehr bekannt. Die Bedienung des Schalterfernantriebs erfolgt jeweils ferngesteuert, wobei vor Ort eine manuelle oder elektrische Bedienung je nach Produkt möglich ist. Dabei steuert eine Steuereinheit des Schalterfernantriebes einen Antriebsmotor und erhält dafür elektrische Impulse zum Ein- und Ausschalten des Motorstromes von der Fernwirkstation. Gemäß Seite 3 der Produktinformation ist der Schalterfernantrieb je nach Produkt mit seiner Steuereinrichtung über einen 3-, 4-, 6- oder 7-adrigen Leiter anschließbar und kann (gemäß der Produktinformation Seite 2 unten) durch ein so genanntes Supervisory Control and Data Acquisition (SCADA) System, eine Ansteuereinheit oder durch ein Funksteuermodul mit GSM- oder GPRS-Funktionen angesteuert werden.

In einer alternativen Bauweise zur eingangs geschilderten direkten Energieversorgung des Schalterfernantriebes über die Fernwirkstation wird bei elektrisch autark versorgten Schalterantrieben mittels beispielsweise eines Gleichstromwandlers aus der Fahrleitung oder mittels einer Solarstromversorgung eine Energieversorgung des Schalterfernantriebes sicher gestellt. Zur Fernsteuerung werden dabei alternative Verfahren zur Übertragung von Steuerbefehlen eingesetzt, weil oft keine direkte Kabelverbindung zur Fernwirkstation mehr eingesetzt wird.

Es existieren weiterhin Datenübertragungsanordnungen zum Steuern von Schalterfernantrieben, bei denen der Schalterfernantrieb über eine Ethernet-basierte Kommunikation ferngesteuert werden kann. Dazu werden beispielsweise eine so genannte "Remote Terminal Unit (RTU)" oder eine speicherprogrammierbare Schaltung (SPS) per Ethernet-Verbindung mit der Fernwirkstation verbunden und im Schalterfernantrieb eingebaut, wobei ggf. zur Überbrückung langer Distanzen entlang einer Bahnstromversorgungsstrecke der RTU oder SPS ein Kommunikationsadapter vorgeschaltet wird. Der Kommunikationsadapter kann beispielsweise die Übermittlung von Ethernet-Daten über ein Kupferkabel oder einen Lichtwellenleiter ermöglichen. Darüber hinaus können Modem-Verbindungen über GPRS-Funkverbindungen eingesetzt werden.

Eine SPS mit Ethernet-Schnittstelle ist beispielsweise in Form des Geräts "IDS 850" oder "IDS 640" aus der Produktbroschüre "Fernwirk- und Automatisierungstechnik" der IDS GmbH in Ettlingen, Identifikationscode VPM.10317.11095, bekannt. Die SPS "IDS 850" oder "IDS 640" ist dafür vorgesehen, mittels angeschlossener Kommunikationsadapter wie etwa Modems beispielsweise über GSM/GPRS/UMTS-Datendienste mit einer Fernwirkstation zu kommunizieren (vgl. Seite 4 der Produktbroschüre).

Die von der Fernwirkstation per Ethernet erhaltenen Befehle werden über den Kommunikationsadapter an die RTU oder die SPS übermittelt und in analoge elektrische Schaltbefehle umgesetzt, die dann an die Steuereinrichtung übertragen werden.

Weiterhin ist es aus der Produktbroschüre "Modulares Fernwirksystem für GPRS und Netzwerkstrukturen" der EES-Elektra Elektronik GmbH & Co Störcontroller KG aus Backnang vom 23.02.2010 gemäß dem "Prinzip-Schaubild" auf Seite 5 bekannt, ein Prozessleitsystem mittels Ethernet über einen Router mit einem DSL-Modem zu verbinden, um mittels der so genannten GSM-, GPRS- oder UMTS-Datenübertragungsprotokolle über das Internet Steuerbefehle an eine entsprechende Unterstation mit angeschlossener SPS zu senden.

Ferner ist es aus der Produktbeschreibung "IDS Fernwirk- und Automatisierungstechnik" mit Stand 01/2011 der IDS GmbH in Ettlingen, Identifikationscode VPM.10274.11009, gemäß der Abbildung "IP-basierte Kommunikationswege" auf Seite 10 bekannt, in einem Fernwirksystem mit Internetkommunikation mehrere Router nach Art eines Ringnetzes zu verbinden.

Es ist die Aufgabe der vorliegenden Erfindung, eine verbesserte Steuereinrichtung zum Steuern mindestens eines Schalterfernantriebes für mindestens einen Trenn- und/oder Lasttrennschalter in einem elektrischen Energieversorgungsnetz bereit zu stellen, insbesondere eine Steuereinrichtung, die eine vergleichsweise einfache und kostensparende Steuerung ermöglicht.

Die Erfindung löst diese Aufgabe durch eine Steuereinrichtung der eingangs angegebenen Art, die mindestens eine Ethernet-Schnittstelle für das Empfangen von Steuerbefehlen und das Senden von Rückmeldungen aufweist. Dabei werden die Daten beim Empfangen von Steuerbefehlen und Senden von Rückmeldungen als Daten im Ethernet-Datenformat übertragen.

Dies ist von Vorteil, weil die Steuereinrichtung nun von einer Fernwirkstation oder einem anderen Kommunikationsgerät digitale Steuerbefehle erhalten kann und nicht mehr wie bei bekannten Steuereinrichtungen nur elektrische Steuersignale empfangen kann. Auf diese Weise werden bisher zwischengeschaltete SPS oder RTUs nicht mehr benötigt, was vorteilhaft ist, weil Kosten und Wartungsaufwand für Schalterfernantriebe verringert werden.

Darüber hinaus ergibt sich ein vereinfachter und vorteilhafter Aufbau eines Schalterfernantriebes mit der erfindungsgemäßen Steuereinrichtung, weil nicht wie im Stand der Technik eine Umsetzung der von einem Kommunikationsadapter an eine SPS oder RTU übermittelten digitalen Steuerbefehle in elektrische Steuerbefehle erfolgen muss. Dies ist vorteilhaft, weil es die Datenübertragungszuverlässigkeit erhöht.

In einer bevorzugten Ausführungsform der erfindungsgemäßen Steuereinrichtung ist die Ethernet-Schnittstelle dafür geeignet, mittels einer Ethernet-Verbindung gemäß der Norm IEC 60870-5-101 Second Edition 2003-02 und/oder IEC 60870-5-10 Second Edition 2006-06 und/oder IEC 61850-8-1 Edition 2.0 2011-06 zu kommunizieren. Dies ist vorteilhaft, weil die genannten Normen weit verbreitet sind.

Ferner ist Gegenstand der vorliegenden Erfindung eine Datenübertragungsanordnung zum Steuern von Schalterfernantrieben für Trenn- und/oder Lasttrennschalter in einem elektrischen Energieversorgungsnetz mit mindestens einer Fernwirkstation und mit mindestens einer erfindungsgemäßen Steuereinrichtung, wobei die mindestens eine Fernwirkstation und die mindestens eine Steuereinrichtung dafür geeignet sind, unter Verwendung der mindestens einen Ethernet-Schnittstelle der mindestens einen Steuereinrichtung zu kommunizieren. Es ergeben sich die eingangs für die erfindungsgemäße Steuereinrichtung genannten Vorteile.

In einer bevorzugten Ausführungsform der erfindungsgemäßen Datenübertragungsanordnung sind die mindestens eine Fernwirkstation und die mindestens eine Steuereinrichtung zur Kommunikation in einem Ringnetz ausgebildet. Dies ist vorteilhaft, weil in einem Ringnetz die Kommunikation auch dann aufrecht erhalten werden kann, wenn in Fehlerfall die Kommunikationsverbindung an einer Stelle des Netzes unterbrochen ist, wie z.B. bei einem Kabelschaden.

In einer anderen bevorzugten Ausführungsform der erfindungsgemäßen Datenübertragungsanordnung ist zusätzlich mindestens ein Kommunikationsadapter zwischen der mindestens einen Fernwirkstation und der mindestens einen Steuereinrichtung vorgesehen, wobei der mindestens eine Kommunikationsadapter dafür geeignet ist, einerseits über eine erste Kommunikationsverbindung mit der mindestens einen Fernwirkstation und andererseits über eine Ethernet-Verbindung mit der mindestens einen Steuereinrichtung zu kommunizieren. Die Verwendung eines Kommunikationsadapters ist vorteilhaft, weil der Kommunikationsadapter das Überbrücken von langen Distanzen zwischen der Fernwirkstation und der Steuereinrichtung ermöglicht.

In einer weiteren bevorzugten Ausführungsform der erfindungsgemäßen Datenübertragungsanordnung umfasst die erste Kommunikationsverbindung eine Kommunikationsverbindung über ein Stromnetz nach Art einer Powerline-Communication. Die Verwendung einer Kommunikationsverbindung über ein Stromnetz ist ein Vorteil, weil keine zusätzliche Infrastruktur für eine Datenkommunikation benötigt wird. Dies spart Kosten und Wartungsaufwand ein.

In einer bevorzugten Weiterbildung der vorgenannten Ausführungsform der erfindungsgemäßen Datenübertragungsanordnung nutzt die Kommunikationsverbindung über ein Stromnetz das zur Energieversorgung der Schalterfernantriebe dienende Stromnetz. Dies ist vorteilhaft, weil nun mit der Fernwirkstation über eine einzige leitende Verbindung kommuniziert werden kann, insbesondere wenn das zur Energieversorgung der Schalterfernantriebe dienende Stromnetz direkt von der Fernwirkstation ausgeht.

In einer weiteren bevorzugten Ausführungsform der erfindungsgemäßen Datenübertragungsanordnung ist das zur Energieversorgung der Schalterfernantriebe dienende Stromnetz nach Art eines Ringnetzes ausgebildet. Dies ist vorteilhaft, weil auch bei Unterbrechung der leitenden Verbindung an einer Stelle, beispielsweise durch einen Kabelschaden, eine Energieversorgung der Schalterfernantriebe und eine zuverlässige Datenkommunikation gewährleistet ist.

In einer weiteren bevorzugten Ausführungsform der erfindungsgemäßen Datenübertragungsanordnung umfasst die erste Kommunikationsverbindung eine Kommunikationsverbindung mittels optischen Signalen über einen Lichtwellenleiter. Dies ist vorteilhaft, weil Lichtwellenleiter weit verbreitet und besonders schnell, störsicher und zuverlässig sind. Darüber hinaus gestatten Lichtwellenleiter wie z.B. Glasfaserkabel eine vergleichsweise hohe Datenübertragungsrate.

In einer anderen bevorzugten Ausführungsform der erfindungsgemäßen Datenübertragungsanordnung umfasst die erste Kommunikationsverbindung eine Kommunikationsverbindung mittels Funksignalen, insbesondere GPRS-, EDGE-, UMTS-, HSDPA-Funksignalen. Dies ist ein Vorteil, weil eine Kommunikationsverbindung mittels Funksignalen ohne Installation von Kabeln und daher besonders kostengünstig umgesetzt werden kann. Ein weiterer Vorteil ist es, dass vielerorts bereits öffentlich verfügbare Funknetze beispielsweise für den Mobilfunk installiert sind.

In einer weiteren bevorzugten Ausführungsform der erfindungsgemäßen Datenübertragungsanordnung umfasst die erste Kommunikationsverbindung eine Kommunikationsverbindung über ein Telefonnetz und/oder das Internet. Dies ist vorteilhaft, weil es sich um weit verbreitete Kommunikationstechnologien handelt.

In einer anderen bevorzugten Ausführungsform der erfindungsgemäßen Datenübertragungsanordnung ist der Kommunikationsadapter in die Steuereinrichtung integriert. Dies ist vorteilhaft, weil durch die direkte Verbindung von Kommunikationsadapter und Steuereinrichtung keine Kabelverbindung zwischen beiden Geräten benötigt wird, was Kosten und Einbauraum einspart. Dabei ist die Ethernet-Schnittstelle der Steuereinrichtung als eine interne Schnittstelle zum Kommunikationsadapter ausgebildet.

Es sind in schematischer Darstellung in
- Figur 1: eine bekannte Verschaltung eines Fernwirksystems zum Steuern von Schalterfernantrieben für Trenn- und/oder Lasttrennschalter und in
- Figur 2: eine bekannte Datenübertragungsanordnung zum Steuern von Schalterfernantrieben für Trennund/oder Lasttrennschalter und in
- Figur 3: eine Ausführungsform einer erfindungsgemäßen Datenübertragungsanordnung zum Steuern von Schalterfernantrieben für Trenn- und/oder Lasttrennschalter und in
- Figur 4: eine Verschaltung eines Fernwirksystems zum Steuern von Schalterfernantrieben für Trennund/oder Lasttrennschalter mit einer Ausführungsform einer erfindungsgemäßen Datenübertragungsanordnung abgebildet.

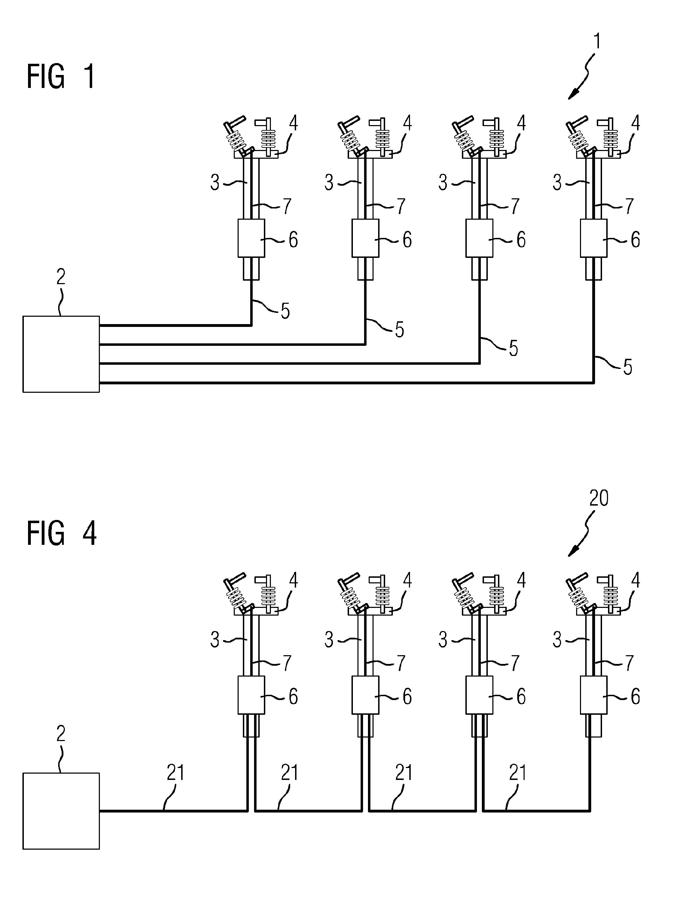

In Figur 1 ist eine bekannte Verschaltung eines Fernwirksystems 1 zum Steuern von Schalterfernantrieben 6 für Trennund/oder Lasttrennschalter 4 abgebildet, bei der eine Fernwirkstation 2 über je ein mindestens 3-adriges Kabel 5 mit einem an einem Mast 3 angebrachten Schalterfernantrieb 6 verbunden ist. Der Schalterfernantrieb 6 erhält über das mindestens 3-adrige Kabel 5 dabei jeweils sowohl Steuerbefehle als auch elektrische Energie für einen Antriebsmotor. An der Mastspitze befindet sich jeweils ein Trennschalter 4, dessen bewegbarer Hauptkontakt mittels eines Gestänges 7 mit dem Schalterfernantrieb 6 verbunden ist und über dieses Gestänge 7 bewegt wird.

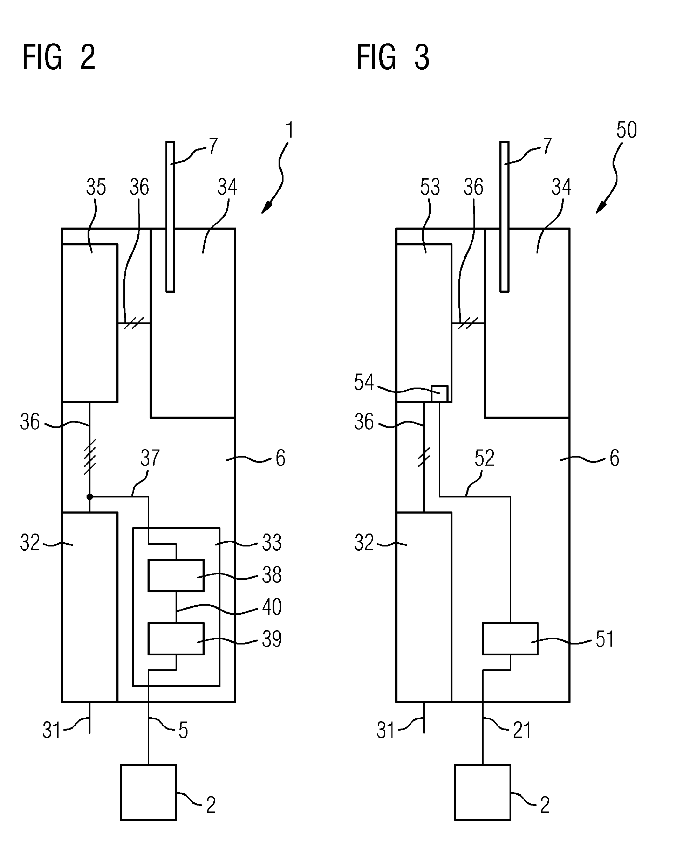

In der Figur 2 ist eine bekannte Datenübertragungsanordnung 30 zum Steuern von Schalterfernantrieben 6 für Trennund/oder Lasttrennschalter 4 abgebildet, wie sie beispielsweise in bekannten Fernwirksystemen gemäß Figur 1 eingesetzt wird. Die Datenübertragungsanordnung 30 umfasst einen Schalterfernantrieb 6 und weist einen Antriebsmotor 34 mit einem Gestänge 7 auf. Der Antriebsmotor 34 ist über eine mehradrige Leitung 36 mit einer Steuereinrichtung 35 verbunden, die ihre Energieversorgung über eine weitere mehradrige Leitung 36 von einer Stromversorgung 32 erhält, die beispielsweise als Gleichspannungswandler ausgebildet ist. Die Stromversorgung 32 ist gegebenenfalls dafür ausgerichtet, mittels eines Energiespeichers Energie zwischenzuspeichern, so dass auch bei einer Unterbrechung der Energiezufuhr über eine Leitung 31 ein Betrieb des Schalterfernantriebs 6 möglich ist. Über eine Kommunikationsverbindung 5 erhält der Schalterfernantrieb Steuerbefehle und meldet Rückmeldungen an die Fernwirkstation 2 zurück. Die Kommunikationsverbindung 5 ist mit einer Kommunikationseinrichtung 33 verbunden. Die Kommunikationseinrichtung 33 weist einen Kommunikationsadapter 39 auf, der die über die Leitung 5 eingehenden Signale in Ethernet-Kommunikationsdaten umwandelt. Diese Ethernet-Kommunikationsdaten werden über eine Ethernet-Verbindung 40 an eine speicherprogrammierbare Schaltung 38 übertragen. In der speicherprogrammierbaren Schaltung 38 werden die Steuerbefehle aus dem Ethernet-Datenformat in ein analoges Datenformat umgewandelt und über die Leitung 37 auf das mehradrige Kabel 36 aufgespielt; es sind in dem mehradrigen Kabel 36 einige Adern für die Übermittlung analoger Steuerbefehle an die Steuereinrichtung 35 vorgesehen. Diese mehrfache Umwandlung des Kommunikationsformats ist historisch bedingt und gründet darauf, dass herkömmliche Schalterfernantriebe bzw. deren Steuereinrichten bisher für eine elektrische Ansteuerung ausgelegt sind.

In der Figur 3 ist eine Ausführungsform einer erfindungsgemäßen Datenübertragungsanordnung 50 zum Steuern von Schalterfernantrieben 6 für Trenn- und/oder Lasttrennschalter 4 abgebildet. Gleiche Baugruppen wie in Figur 2 sind mit den gleichen Bezugszeichen versehen und werden nicht erneut diskutiert. Die Datenübertragungsanordnung 50 weist eine erfindungsgemäße Steuereinrichtung 53 mit einer Ethernet-Schnittstelle 54 auf. Mittels der Ethernet-Schnittstelle 54 empfängt die Steuereinrichtung 53 Steuerbefehle; diese werden über die Ethernet-Leitung 52 von einem Kommunikationsadapter 51 übermittelt. Der Kommunikationsadapter 51 ist über eine erste Kommunikationsverbindung wie beispielsweise einen Lichtwellenleiter 21 mit der Fernwirkstation 2 verbunden, wodurch weite Entfernungen zwischen der Fernwirkstation und dem Schalterfernantrieb überbrückt werden können.

Im Gegensatz zur bekannten Datenübertragungsanordnung gemäß Figur 3 ermöglicht die Verwendung der Ethernet-Schnittstelle 54 es, den Kommunikationsadapter 51 direkt mit der Steuereinrichtung 53 zu verbinden. Eine speicherprogrammierbare Schaltung oder ähnliches wird nicht mehr benötigt, da vor der Steuereinrichtung 53 keine Umsetzung der vom Kommunikationsadapter 51 gelieferten digitalen Signale in analoge Steuersignale benötigt wird. Notwendige elektrische Signale, z.B. zur Statusmeldung der optionalen Stromversorgung, können ebenfalls in der Steuerung eingelesen und über die Ethernet-Schnittstelle übertragen werden.

In der Figur 4 ist eine Verschaltung eines Fernwirksystems zum Steuern von Schalterfernantrieben für Trenn- und/oder Lasttrennschalter mit einer Ausführungsform einer erfindungsgemäßen Datenübertragungsanordnung 20 abgebildet, bei der im Gegensatz zur bekannten Anordnung nach Figur 1 alle Schalterfernantriebe 6 über eine einzige Kabelverbindung 21 mit der Fernwirkstation 2 verbunden sind. Die Kabelverbindung 21 stellt die Energieversorgung der Schalterfernantriebe 6 sicher und dient darüber hinaus zur Übermittlung von Steuerbefehlen und Rückmeldungen. Dies ist vorteilhaft, weil nicht mehr für jeden Schalterfernantrieb beziehungsweise für jeden Mast einer Bahnstromversorgungsanlage ein einzelnes 3-adriges Kabel zur Energieversorgung und Datenkommunikation verlegt werden muss.

## Patentansprüche

1. Steuereinrichtung (53) zum Steuern mindestens eines Schalterfernantriebes (6) für mindestens einen Trenn- und/oder Lasttrennschalter (4) in einem elektrischen Energieversorgungsnetz,
**dadurch gekennzeichnet, dass**
die Steuereinrichtung (53) mindestens eine Ethernet-Schnittstelle (54) für das Empfangen von Steuerbefehlen und das Senden von Rückmeldungen aufweist.

2. Steuereinrichtung (53) nach Anspruch 1,
**dadurch gekennzeichnet, dass**
die Ethernet-Schnittstelle (54) dafür geeignet ist, mittels einer Ethernet-Verbindung gemäß der Norm IEC 60870-5-101 Second Edition 2003-02 und/oder IEC 60870-5-10 Second Edition 2006-06 und/oder IEC 61850-8-1 Edition 2.0 2011-06 zu kommunizieren.

3. Datenübertragungsanordnung (50) zum Steuern von Schalterfernantrieben (6) für Trenn- und/oder Lasttrennschalter (4) in einem elektrischen Energieversorgungsnetz,
- mit mindestens einer Fernwirkstation (2);
- mit mindestens einer Steuereinrichtung (53) nach einem der vorhergehenden Ansprüche,
**dadurch gekennzeichnet, dass**
die mindestens eine Fernwirkstation (2) und die mindestens eine Steuereinrichtung (53) dafür geeignet sind, unter Verwendung der mindestens einen Ethernet-Schnittstelle (54) der mindestens einen Steuereinrichtung (53) zu kommunizieren.

4. Datenübertragungsanordnung (50) nach Anspruch 3,
**dadurch gekennzeichnet, dass**
die mindestens eine Fernwirkstation (2) und die mindestens eine Steuereinrichtung (53) zur Kommunikation in einem Ringnetz ausgebildet sind.

5. Datenübertragungsanordnung (50) nach Anspruch 4,
**dadurch gekennzeichnet, dass**
zusätzlich mindestens ein Kommunikationsadapter (51) zwischen der mindestens einen Fernwirkstation (2) und der mindestens einen Steuereinrichtung (53) vorgesehen ist, wobei der mindestens eine Kommunikationsadapter (51) dafür geeignet ist, einerseits über eine erste Kommunikationsverbindung (21) mit der mindestens einen Fernwirkstation (2) und andererseits über eine Ethernet-Verbindung (52) mit der mindestens einen Steuereinrichtung (53) zu kommunizieren.

6. Datenübertragungsanordnung (50) nach Anspruch 5,
**dadurch gekennzeichnet, dass**
die erste Kommunikationsverbindung (21) eine Kommunikationsverbindung über ein Stromnetz nach Art einer Powerline-Communication umfasst.

7. Datenübertragungsanordnung (50) nach Anspruch 6,
**dadurch gekennzeichnet, dass**
die Kommunikationsverbindung über ein Stromnetz das zur Energieversorgung der Schalterfernantriebe dienende Stromnetz nutzt.

8. Datenübertragungsanordnung (50) nach Anspruch 7,
**dadurch gekennzeichnet, dass**
das zur Energieversorgung der Schalterfernantriebe (6) dienende Stromnetz nach Art eines Ringnetzes ausgebildet ist.

9. Datenübertragungsanordnung (50) nach einem der vorhergehenden Ansprüche 5 bis 8,
**dadurch gekennzeichnet, dass**
die erste Kommunikationsverbindung (21) eine Kommunikationsverbindung mittels optischen Signalen über einen Lichtwellenleiter umfasst.

10. Datenübertragungsanordnung (50) nach einem der vorhergehenden Ansprüche 5 bis 9,
**dadurch gekennzeichnet, dass**
die erste Kommunikationsverbindung (21) eine Kommunikationsverbindung mittels Funksignalen, insbesondere GPRS-, EDGE-, UMTS-, HSDPA-Funksignalen, umfasst.

11. Datenübertragungsanordnung (50) nach einem der vorhergehenden Ansprüche 5 bis 10,
**dadurch gekennzeichnet, dass**
die erste Kommunikationsverbindung (21) eine Kommunikationsverbindung über ein Telefonnetz und/oder das Internet umfasst.

12. Datenübertragungsanordnung (50) nach einem der vorhergehenden Ansprüche 5 bis 11,
**dadurch gekennzeichnet, dass**
der Kommunikationsadapter (51) in die Steuereinrichtung (53) integriert ist.
